# EUROPEAN PATENT APPLICATION

(11) **EP 4 000 718 A1**
(43) Date of publication of application: **25.05.2022**
(21) Application number: 21150559.9
(22) Date of filing: 07.01.2021
(51) Int. Cl.: B01D 53/94, B01J 23/63, B01J 37/02, F01N 3/10

(54) **CATALYST COMPOSITION**

(30) Priority: 11.11.2020 IN 202041049330
(71) Applicant: Johnson Matthey Public Limited Company, London EC4A 4AB (GB)
(72) Inventor: TRIVEDI, Aditya, Gurgaon, Haryana 122050 (IN); WASEKAR, Parag, Gurgaon, Haryana, 122050 (IN); BEECHAM, Joel, Gurgaon, Haryana, 122050 (IN)
(74) Representative: Wilson, Nicola Ann

(57) **Abstract**

A catalyst article for treating exhaust gases from an internal combustion engine, in particular the exhaust gases from an internal combustion engine having a displacement of less than 1000 cc, such as that of a motorcycle or similar. The catalyst composition comprises an oxygen storage component comprising CeO₂, ZrO₂, and a rare earth oxide component selected from Gd₂O₃, Nd₂O₃, La₂O₃, or mixtures thereof; an inorganic oxide; and a noble metal component comprising palladium and rhodium. The invention further relates to a washcoat comprising the catalyst composition, and a catalyst article comprising the catalyst composition, a method of treating exhaust gas with the catalyst article, a method for manufacturing the catalyst article and systems comprising the catalyst article.

## Description

### Field of the Invention

The present invention relates to a catalyst composition for treating exhaust gas from an internal combustion engine. More specifically, the present invention relates to a catalyst composition for treating exhaust gas from a motorcycle engine, a washcoat comprising the catalyst composition, and a catalyst article comprising the catalyst composition. The invention further relates to a method of treating exhaust gas with the catalyst article, a method for manufacturing the catalyst article and systems comprising the catalyst article.

### Background of the Invention

Three-way catalysts (TWCs) are conventionally used to convert carbon monoxide, hydrocarbons, and nitrogen oxides found in the exhaust gases of gasoline fuelled internal combustion engines. These contaminants are harmful substances and their emission is strictly controlled by environmental regulations around the world.

Three-way catalysts purify exhaust gases by simultaneously oxidising carbon monoxide and hydrocarbons and reducing nitrogen oxides. Three-way catalysts typically comprise a noble metal (such as platinum, rhodium, palladium, iridium, or ruthenium) on a catalyst support. The catalyst support typically comprises a porous refractory oxide having a high surface area, for example, an alumina, a silica, or a ceria. The supported catalyst may then be applied to a substrate, or extruded, to form a catalyst article.

It is known to use a three-way catalyst in combination with an oxygen storage component (OSC). Oxygen storage components adjust the partial pressure of oxygen in the exhaust gas by reversibly storing and releasing oxygen. By doing so, an oxygen storage component can provide improved gas compositions for the three-way catalyst reactions.

An oxygen storage component may be incorporated into a three-way catalyst support material. For example, ceria (CeO₂) is well known as an OSC material and undergoes a reversible redox reaction involving the Ce³⁺/Ce⁴⁺ couple to store or release oxygen. Catalyst supports containing ceria are commonly employed, such as a ceria-zirconia composite, and can be optionally mixed with alumina or other refractory components. Oxygen storage components may themselves act as supports for noble metal catalysts of the three-way catalyst.

WO2010/075487 relates to palladium only catalyst compositions comprising a refractory metal oxide and an oxygen storage component which are applied to a carrier substrate in separate layers.

Catalyst articles comprising TWCs are typically prepared by coating a substrate (e.g. a honeycomb monolith) with a slurry comprising particles of a catalyst composition, commonly referred to as washcoating. The process of washcoating is well known in the art.

Three-way catalysts, like other exhaust gas catalysts, typically achieve very high efficiencies once they reach their operating temperature (typically, 200°C and higher). However, these catalysts may be relatively inefficient below their operating temperature. The activity of a three-way catalyst is often measured in terms of "light-off temperature".

The term "light-off temperature" as used herein will be understood to refer to the temperature at which 50% catalytic conversion is achieved, and is synonymous with "T₅₀". It will be understood that the light-off temperature for different components in an exhaust gas may be different from one another. For example, a catalyst's light-off temperature for carbon monoxide may be different from its light-off temperature for nitrogen oxides.

As is well known in the art, the quantity of carbon monoxide (CO), unburned hydrocarbons (HC) and nitrogen oxides (NOₓ) emitted when fuel is combusted in an internal combustion engine is influenced by the air-to-fuel ratio in the engine's combustion cylinder. An exhaust gas having a stoichiometrically balanced composition is one in which the concentration of oxidising gases (NOₓ and O₂) and reducing gases (HC and CO) are substantially matched. The air-to-fuel ratio that produces this stoichiometrically balanced exhaust gas composition is typically given as 14.7:1. In a car engine air-to-fuel ratios typically vary from 14:1 to 15:1.

A way of defining the compositional balance between oxidising gases and reducing gases of the exhaust gas is the lambda (λ) value of the exhaust gas, which can be defined as:
Actual engine air-to-fuel ratio / Stoichiometric engine air-to-fuel ratio.

A lambda value of 1 represents a stoichiometrically balanced (a stoichiometric) exhaust gas composition. A lambda value of greater than 1 represents an excess of oxidising gases and the composition is described as "lean". A lambda value of less than 1 represents an excess of reducing gases and the composition is described as "rich".

It should be appreciated that the reduction of NOₓ using a three-way catalyst is less efficient when the exhaust gas composition is lean of stoichiometric. Equally, the three-way catalyst is less able to oxidise CO and HC when the exhaust gas composition is rich. The challenge, therefore, is to maintain the composition of the exhaust gas within the three-way catalyst at as close to the stoichiometric composition as possible.

Larger engine vehicles, such as those with an engine size of greater than 1000 cc, are able to maintain catalyst articles at close to ideal conditions by adjusting the combustion cycle of the engine to produce the desired exhaust gas compositions. Furthermore, because physically larger catalysts are used in larger engine vehicles, they have larger thermal masses, and therefore better retain the heat necessary to achieve light-off, even during periods of lighter engine duty.

As is known to those skilled in the art, catalysts for motorcycles and other small engines (e.g. having an engine size of < 1000 cc) differ structurally from those found in larger vehicles (e.g. cars, vans and trucks) and operate under different conditions.

For instance, motorcycle engines are often subject to periods of heavy acceleration followed by lighter use, which can cause intermittent gas flow. For instance, the air-to-fuel ratio of a motorcycle engine may vary by as much as 13:1 to 17:1. Such wide ranges of air-to-fuel ratios present unique challenges in the treatment of the resulting exhaust gas. Their exhaust systems thus see rapid and substantial changes in exhaust gas composition (i.e. lambda values), gas volumes, and temperatures. These factors have a significant influence on the efficiency of a three-way catalyst.

As such, catalyst articles and compositions which are used in the exhaust systems of larger vehicles may not be suitable for use in the exhaust systems of small engines.

Significant challenges therefore remain in treating exhaust gas using three-way catalysts in motorcycle applications.

Accordingly, the present invention seeks to address problems associated with conversion of exhaust gases in motorcycle exhausts and provide a catalyst article which maintains good performance over wide ranging and variable engine air-to-fuel ratios and temperatures.

### Summary of the Invention

According to a first aspect of the invention there is provided a catalyst composition for treating the exhaust gas from a motorcycle engine, the composition comprising:
i. 65 to 80 wt% of an oxygen storage component comprising:
   - 35-50 mol% CeO₂,
   - 45-60 mol% ZrO₂, and
   - 2-10 mol% of a rare earth oxide component selected from Gd₂O₃, Nd₂O₃, La₂O₃, or mixtures thereof;
ii. 20 to 35 wt% of an inorganic oxide; and
iii. a noble metal component supported on (i) and/or (ii), wherein the noble metal component comprises palladium and rhodium.

It has surprisingly been found that catalyst compositions according to the invention are able to provide highly effective three-way catalysts for treating exhaust gases from motorcycle engines. In particular, catalyst compositions of the present invention show improved light-off temperatures and maintain excellent conversion of carbon monoxide, hydrocarbons, and nitrogen oxide over a wide range of air-to-fuel ratios. The catalyst compositions of the first aspect provide three-way catalysts which can react quickly to changes in exhaust gas compositions and maintain ideal lambda values for efficient catalytic conversion of the exhaust gases.

In a second aspect of the invention there is provided a washcoat composition comprising a catalyst composition according to the first aspect of the present invention and a liquid medium.

In a third aspect of the invention there is provide a catalyst article comprising a substrate and a catalyst composition according to the first aspect of the present invention.

In a fourth aspect of the invention there is provided a method of making a catalyst article of the third aspect of the invention, comprising the step of coating a substrate with a washcoat composition according to the second aspect of the invention.

In a fifth aspect of the invention there is provided an exhaust system comprising the catalyst article of the third aspect of the invention.

In a sixth aspect of the invention there is provided a system comprising an internal combustion engine and a catalyst article according to the third aspect, wherein the internal combustion engine is a gasoline fuelled spark ignition engine having a displacement of less than or equal to 1000 cc.

In a seventh aspect of the invention there is provided a method of treating an exhaust gas from an engine, in particular a gasoline fuelled spark ignition engine, having a displacement of less than or equal to 1000 cc comprising contacting the exhaust gas with a catalyst article according to the third aspect.

### Brief Description of the Drawings

**Figure 1** shows the T₅₀ light-off temperatures for carbon monoxide, hydrocarbons, and nitrogen oxides, for catalyst article of the invention and comparative examples.
**Figure 2** shows carbon monoxide (CO) conversion (%) as a function of temperature.
**Figure 3** shows carbon monoxide (CO) conversion (%) as a function of air-to-fuel ratio.
**Figure 4** shows total hydrocarbon (THC) conversion (%) as a function of temperature.
**Figure 5** shows total hydrocarbon (THC) conversion (%) as a function of air-to-fuel ratio.
**Figure 6** shows nitrogen oxide (NOₓ) conversion (%) as a function of temperature.
**Figure 7** shows nitrogen oxide (NOₓ) conversion (%) as a function of air-to-fuel ratio.
**Figure 8** shows carbon monoxide (CO) conversion (%) as a function of air-to-fuel ratio for Comparative Catalyst Article 8 and Catalyst Articles 6 and 7.

### Detailed Description

Preferred and/or optional features of the invention will now be set out. Any aspect/embodiment of the invention may be combined with any other aspect/embodiment of the invention unless the context demands otherwise. Any of the preferred and/or optional features of any aspect may be combined, either singly or in combination, with any aspect of the invention unless the context demands otherwise.

The first aspect of the invention provides a catalyst composition for treating the exhaust gas from a motorcycle engine, the composition comprising:
i. 65 to 80 wt% of an oxygen storage component comprising:
   - 35-50 mol% CeO₂,
   - 45-60 mol% ZrO₂, and
   - 2-10 mol% of a rare earth oxide component selected from Gd₂O₃, Nd₂O₃, La₂O₃, or mixtures thereof;
ii. 20 to 35 wt% of an inorganic oxide; and
iii. a noble metal component supported on (i) and/or (ii), wherein the noble metal component comprises palladium and rhodium.

The oxygen storage component may comprise 35 mol% or more CeO₂, 37 mol% or more CeO₂, or 38 mol% or more CeO₂. The oxygen storage component may comprise 50 mol% or less CeO₂, 48 mol% or less CeO₂, or 46 mol% or less CeO₂. For example, the oxygen storage component may comprise 37-48 mol% CeO₂, or 38-46 mol% CeO₂.

The oxygen storage component may comprise 45 mol% or more ZrO₂, 48 mol% or more ZrO₂, or 49 mol% or more ZrO₂. The oxygen storage component may comprise 60 mol% or less ZrO₂, 58 mol% or less ZrO₂, or 57 mol% or less ZrO₂. For example, the oxygen storage component may comprise 48-58 mol% ZrO₂, for example 49-57 mol% ZrO₂.

The oxygen storage component may comprise 2 or more mol% of the rare earth oxide component, 3 or more mol% of the rare earth oxide component, or 4 or more mol% of the rare earth oxide component. The oxygen storage component may comprise 10 or less mol% of the rare earth oxide component, 9 or less mol% of the rare earth oxide component, or 8 or less mol% of the rare earth oxide component. For example, the oxygen storage component may comprise 2-10 mol% of the rare earth oxide component; for example 4-9 mol% of the rare earth oxide component.

The rare earth oxide component is selected from Gd₂O₃, Nd₂O₃, and La₂O₃, or mixtures thereof. For instance, the oxygen storage component may comprise Gd₂O₃, the oxygen storage component may comprise Nd₂O₃, and/or the oxygen storage component may comprise La₂O₃. The oxygen storage component may comprise a combination of Gd₂O₃, Nd₂O₃, and/or La₂O₃.

The oxygen storage component may consist of 35-50 mol% CeO₂, 45-60 mol% ZrO₂, and 2-10 mol% of the rare earth oxide component. For example, the oxygen storage component may consist of 37-48 mol% CeO₂, 48-58 mol% ZrO₂, and 2-10 mol% of the rare earth oxide component; or 38-46 mol% CeO₂, 49-57 mol% ZrO₂, and 4-9 mol% of the rare earth oxide component. The ranges specified above for each of CeO₂, ZrO₂ and the rare earth oxide component may be recombined in any order. For example, the oxygen storage component may consist of 35-50 mol% CeO₂, 48-58 mol% ZrO₂, and 2-10 mol% of the rare earth oxide component.

The oxygen storage component may comprise approximately equimolar amount of CeO₂ and ZrO₂ according to any of the ranges set out hereinabove. For example, the molar ratio of CeO₂:ZrO₂ according to any of the ranges set out hereinabove may be in the range 0.97-1.03:1, 0.98-1.02:1, 0.99-1.01:1, or about 1:1. For example, the oxygen storage component may comprise or consist of about 48 mol% CeO₂, about 48 mol% ZrO₂, and about 4 mol% of the rare earth oxide component. Alternatively, the oxygen storage component may comprise or consist of about 46 mol% CeO₂, about 46 mol% ZrO₂, and about 8 mol% of the rare earth oxide component. Alternatively, the oxygen storage component may comprise or consist of about 46.5 mol% CeO₂, about 47.5 mol% ZrO₂, and about 6 mol% of the rare earth oxide component.

Without wishing to be bound by any particular theory, it is believed that the presence of a rare earth oxide component selected from Gd₂O₃, Nd₂O₃, La₂O₃, and mixtures thereof in the oxygen storage component of the catalyst composition provides improved light off temperatures and conversion efficiency.

Advantageously, it has been found that when the molar ratio of CeO₂:ZrO₂ in the oxygen storage component of the invention is approximately equimolar, catalyst articles having particularly good (i.e. low) light-off temperatures for all of carbon monoxide, hydrocarbons, and NOₓ may be obtained. Furthermore, when the molar ratio of CeO₂:ZrO₂ in the oxygen storage component of the invention is approximately equimolar, catalyst articles which show particularly good conversion of carbon monoxide across a wide range of air-to-fuel ratios are obtained.

The oxygen storage component may be produced according to the method described in US4839146, the entire contents of which is incorporated herein by reference.

The oxygen storage component is suitably present in the catalyst composition in an amount greater than or equal to 65 wt%, greater than or equal to 68 wt%, or greater than or equal to 70 wt%. The oxygen storage component is suitably present in the catalyst composition in an amount less than or equal to 80 wt%, less than or equal to 78 wt%, or less than or equal to 75 wt%. For example, the oxygen storage component may be present in an amount of from 65 to 80 wt%, from 68 to 78 wt%, or from 70 to 75 wt% based on the total weight of the catalyst composition. Typically, in car and truck applications, which operate under a narrower range of air-to-fuel ratios, an oxygen storage component is present in an amount of between 30 to 45 wt% relative to other components in a catalyst composition.

The catalyst composition comprises an inorganic oxide. The inorganic oxide may be a doped or non-doped alumina, a doped or non-doped silica, a doped or non-doped ceria, or a doped or non-doped ceria-zirconia. Preferably the inorganic oxide is a lanthanum doped alumina. The inorganic oxide may also function as a support onto which at least some of the noble metal catalyst may be loaded. It will be understood that the inorganic oxide is different to the oxygen storage component.

The inorganic oxide may be present in an amount of 20 wt% or more, 22 wt% or more, 25 wt% or more, or 27 wt % or more. The inorganic oxide may be present in an amount of 35 wt% or less, 34 wt% or less, or 33 wt% or less based on the total weight of the catalyst composition. For example, the inorganic oxide may be present in the catalyst composition in an amount of, for example 25 to 34 wt%, or 27 to 33 wt%.

The catalyst composition of the invention may be a catalyst composition for use as a three-way catalyst.

The catalyst composition comprises a noble metal component supported on the oxygen storage component and/or the inorganic oxide. The noble metal component comprises palladium and rhodium. The noble metal component may further comprise one or more additional noble metals selected from the group consisting of platinum, iridium, and ruthenium.

The noble metal component may be supported on the oxygen storage component, the inorganic oxide component, or both the oxygen storage compound and the inorganic oxide. The palladium and rhodium of the noble metal component may individually be associated with one of the oxygen storage component and/or the inorganic oxide. For example, it may be preferred that the rhodium is supported on the oxygen storage component and palladium is supported on both the inorganic oxide and the oxygen storage component.

The noble metal component may be present in the catalyst composition in an amount of 0.3 wt % or more, 0.4 wt% or more, 0.5 wt% or more, 0.6 wt% or more, or 0.7 wt% or more based on the total weight of the catalyst composition. The noble metal component may be present in the catalyst composition in an amount of 4.0 wt% or less, 3.8 wt% or less, 3.7 wt% or less, 3.6 wt% or less, or 3.5 wt% or less based on the total weight of the catalyst composition. For example, the noble metal component is typically present in the catalyst composition in an amount of from 0.3 to 4.0 wt%, 0.4 to 3.8 wt%, 0.5 to 3.7 wt%, 0.6 to 3.6 wt%, or 0.7 to 3.5 wt% based on total weight of the catalyst composition.

The palladium and rhodium of the noble metal component may be present in a weight ratio, expressed as palladium:rhodium, of about 7:1 to about 11:1, about 8:1 to about 10:1, or about 8.5:1 to about 9.5:1, for example about 9:1.

The catalyst composition may optionally comprise a group 1 or a group 2 metal. In particular, the catalyst composition may comprise one or more metals selected from magnesium, calcium, strontium, and barium. Preferably, the catalyst composition comprises barium. The group 1 or the group 2 metal may be supported on the oxygen storage component and/or the inorganic oxide.

The group 1 or the group 2 metal may be present in the catalyst composition in an amount of 0.7 wt% or more, 0.9 wt% or more, 1.1 wt% or more, or 1.3 wt% or more based on the total weight of the catalyst composition. The group 1 or the group 2 metal may be present in an amount of 2 wt% or less, 1.9 wt% or less, 1.8 wt% or less, or 1.7 wt% or less based on the total weight of the catalyst composition. For example, the group 1 or the group 2 metal may be present in an amount of from 0.7 to 2 wt%, from 0.9 to 1.9 wt%, from 1.1 to 1.8 wt%, or from 1.2 to 1.7 wt% based on the total weight of the catalyst composition.

The catalyst composition may be applied to a substrate in the form of a washcoat. Accordingly, a further aspect of the present invention provides a washcoat comprising the catalyst composition of the first aspect and a liquid medium.

The washcoat typically has a solids content of from 40 to 50 wt%, for example 42 to 47 wt%, or 43 to 46 wt%.

The washcoat may be prepared according to the method described hereinbelow.

The method for producing the washcoat may comprise the step of forming a slurry of the oxygen storage component. The slurry of the oxygen storage component may be prepared by suspending the oxygen storage component in a liquid medium, for example in deionised water.

Typically the oxygen storage component is particulate in nature. The oxygen storage component typically has a D₅₀ particle size of less than 10 µm.

The term D₅₀ corresponds to the particle size value below which 50% by volume of the particles in a particular sample or distribution lie. The D₅₀ may be determined using a laser diffraction method (e.g. using a Malvern Mastersizer 2000).

Optionally, the oxygen storage component may be milled prior to forming the slurry. The type of mill is not particularly limited and may be selected by the person skilled in the art, for example the mill may suitably be a ball mill or a planetary mill.

The method for producing the washcoat may comprise the step of adding a noble metal source to the slurry of the oxygen storage component. Suitably, the noble metal source may be added to the slurry as one or more soluble compounds of the desired noble metals in solution. Suitably, the noble metal source may be provided as nitrates of the noble metal in an aqueous solution, for example the noble metal source may be added to the slurry as an aqueous solution of palladium nitrate and/or rhodium nitrate. The skilled person will be able to select alternative noble metal compounds as the source of noble metal. The noble metal source may be added as a single solution comprising both palladium and rhodium compounds, or as two or more separate solutions each comprising either palladium or rhodium compounds. Typically, a palladium compound and a rhodium compound are added to the slurry separately to one another.

The method for producing the washcoat may comprise the step of precipitating the noble metal component from solution so as to impregnate the oxygen storage material with the noble metal component. The step of precipitating the noble metal component from solution may be carried out by adding a precipitating compound, such as an aqueous base, to alter the pH of the solution

The step of adding the noble metal source to the slurry and precipitating the noble metal component may be repeated, for instance to add a further noble metal. Adding further noble metals may be carried out after the first precipitation step. A second precipitation step may then be carried out in an analogous fashion to the first precipitation step.

The method for producing the washcoat may comprise the step of adding an inorganic oxide to the slurry. The inorganic oxide may be added to the slurry before or after the first precipitation step. The inorganic oxide may be added to the slurry after the first precipitation step but before a second precipitation step. Adding an inorganic oxide to the slurry after the first precipitation step but before a second precipitation step allows different noble metal components to be precipitated preferentially onto either the oxygen storage component and/or the inorganic oxide.

The viscosity and rheology of the washcoat may be adjusted using additives known in the art.

Additives are typically added to the washcoat following precipitation of the one or more noble metals and addition of the optional inorganic oxide. For example, additives may be added in an ageing step prior to coating the washcoat onto a substrate.

The concentration of the noble metal component in the slurry prior to the first precipitation step can be selected by the skilled person depending upon the amount of the noble metal component desired in the catalyst composition.

In another aspect of the present invention there is provided a catalyst article, suitable for the treatment of exhaust gas from a motorcycle engine, comprising a substrate to which the catalyst composition of the first aspect has been applied.

Typically, substrates take the form of a honeycomb monolith and may be a metallic substrate, a cordierite substrate, or a silicon carbide substrate. Preferably the substrate is a metallic substrate. Particularly preferably, the substrate is a metallic foil. Where the substrate is a metallic foil, it may be configured such that in use it introduces turbulence into the exhaust gas flow (for example, the metallic foil may be corrugated). Metallic foil substrates are known in the art, for instance Standard structure (STD) and Longitudinal structure (LS) foils available from Nippon Denko Co. Ltd, Japan. Use may also be made of Microhole (MH), Perforated (PE), or Tandem foils.

The catalyst article has an axial length between an inlet end an outlet end. It will be understood that the inlet end and outlet end refer to an inlet and outlet for exhaust gases passing through the catalyst article when in use.

Typically, the axial length of the catalyst article may be 40 millimetres or greater, 45 millimetres or greater, or 50 millimetres or greater. The axial length may be 120 millimetres or less, 110 millimetres or less, or 100 millimetres or less. The axial length may be 40 to 120 millimetres, 45 to 110 millimetres, or 50 to 100 millimetres. For example, the axial length may be 74.5 mm.

The catalyst article may comprise channels traversing the axial length through which exhaust gas will pass in use.

The number of channels may be defined as cells per square inch, corresponding to the number of channels present per square inch of the inlet or outlet of the catalyst article. Suitably, the catalyst article may have 200 cells per square inch or more, 220 cells per square inch or more, 240 cells per square inch or more, or 260 cells per square inch or more. Suitably, the catalyst article may have 360 cells per square inch or less, 340 cells per square inch or less, 320 cells per square inch or less, or 300 cells per square inch or less. For example, the catalyst article may have from 200 to 360 cells per square inch, from 220 to 340 cells per square inch, from 240 to 320 cells per square inch, or from 260 to 300 cells per square inch.

The channels of the catalyst article are separated from one another by walls. The walls of the catalyst article are typically between 30 and 50 microns thick.

The catalyst article may comprise a single layer of the catalyst composition applied to the channels of the substrate. That is, the catalyst article is formed by applying only a single catalyst composition to a substrate, for example as a washcoat. However, this single layer of the catalyst composition may be applied itself in one or more coating steps. The catalyst article may be applied to the substrate using any method known in the art, for example by washcoating. It may be advantageous for the catalyst article to comprise a single layer of the catalyst composition applied to the channels of the substrate as, in use this may decrease the backpressure of the exhaust gas which is beneficial for the operation of a motorcycle engine.

The catalyst article is typically cylindrical in shape, i.e. having a circular cross-section. Alternatively, it may have an elliptical, oval, "race-track" or other asymmetric cross-section.

The catalyst article has a width. The width of the catalyst article is its maximum cross-sectional width. For instance, where the catalyst article is cylindrical in shape the width will be understood to correspond to the diameter of the circular surfaces at the inlet end and outlet end of the catalyst article.

The catalyst article width may be 26 millimetres or greater, 28 millimetres or greater, 30 millimetres or greater, or 32 millimetres or greater. The catalyst article width may be 90 millimetres or less, 86 millimetres or less, 84 millimetres or less, or 82 millimetres or less. The catalyst article width may be 26 to 90 millimetres, 28 to 86 millimetres, 30 to 84 millimetres, 32 to 82 millimetres, for example 33 to 80 millimetres.

The ratio of the axial length of the catalyst article to the width of the catalyst article may be 3:1 or less, 2:1 or less, 3:2 or less or 1:1 or less. The ratio of the axial length of the catalyst article to the width of the catalyst article may be 1:3 or more, 1:2 or more: or 2:3 or more.

The void volume of the catalyst article is the volume of the catalyst article which may be filled by exhaust gas in use and, in a washcoated catalyst article does not include volume of the catalyst article occupied by the substrate or the washcoat applied thereto. The void volume may be 50 cm³ or more, 60 cm³ or more, 70 cm³ or more, or 80 cm³ or more. The void volume may be 650 cm³ or less, 630 cm³ or less, 615 cm³ or less, or 610 cm³ or less. The void volume may be 50 to 650 cm³, 60 to 630 cm³, 70 to 615 cm³, or 80 to 610 cm³.

The surface area of the channels of the catalyst article may be determined by Brunauer-Emmett-Teller methods. The surface area of the channels of the catalyst article will differ depending on the specific substrate chosen. However, typically the surface area of the channels of the catalyst article may be 2 mm² per mm³ or greater, 2.2 mm² per mm³ or greater, 2.4 mm² per mm³ or greater, or 2.6 mm² per mm³ or greater. The surface area of the channels of the catalyst article may be 4.4 mm² per mm³ or less, 4.2 mm² per mm³ or less, 4 mm² per mm³ or less, or 3.9 mm² per mm³ or less. The surface area of the channels of the catalyst article may be 2 to 4.4 mm² per mm³, 2.2 to 4.2 mm² per mm³, 2.4 to 4 mm² per mm³, or 2.6 to 4 mm² per mm³.

In another aspect of the invention there is provided a method for producing a catalyst article comprising the catalyst composition of the first aspect, comprising the step of applying the washcoat of the second aspect to a substrate.

The method of producing a catalyst article may comprise the steps described above in relation to preparing a washcoat of the second aspect of the invention.

The method may comprise the step of coating the washcoat onto a substrate to form a coated substrate. The washcoat may be coated on to a substrate by any method known in the art. The amount of washcoat coated onto the substrate may be determined based upon the desired noble metal component loading on the catalyst article. The washcoat may be coated onto the substrate in one or more coating steps.

Optionally, the method may comprise the step of drying the coated substrate to form a dried coated substrate.

The method may comprise the step of calcining the coated substrate. The step of calcining the coated substrate may be carried out on a substrate which has been optionally dried, or on the coated substrate after coating. Typically, the coated substrate is calcined at a temperature in the range of 450 to 600 °C for a period of up to 3 hours. Suitably, the coated substrate is calcined in a furnace under an atmosphere of air.

It will be appreciated that the steps recited above may be performed in any suitable order and/or that some steps may be combined into a single step. For example, the drying and calcining steps may be combined.

The method for producing a catalyst article according to the invention may comprise the steps of:
(i) forming a washcoat by:
   a. forming a slurry comprising the oxygen storage component and a source of the noble metal component;
   b. adding a precipitating compound to the slurry to precipitate the noble metal components so as to impregnate the oxygen storage component,
(ii) applying the washcoat formed in step (i) to a substrate to form a coated substrate;
(iii) optionally, drying the coated substrate to form a dried coated substrate; and
(iv) calcining the dried coated substrate to form the catalyst article.

According to a further aspect of the invention there is provided an exhaust system comprising a catalyst article of the third aspect of the invention.

In another aspect of the invention there is provided a system comprising an internal combustion engine and a catalyst article according to the third aspect. The internal combustion engine is a gasoline fuelled spark ignition engine having a displacement of less than or equal to 1000 cc.

In a further aspect of the invention there is provided a method of treating an exhaust gas from an engine having a displacement of less than or equal to 1000 cc comprising contacting the exhaust gas with a catalyst article according to the third aspect.

The catalyst composition of the invention finds use in the treatment of emissions from small engine vehicles or machinery, for example motorcycles, mopeds, motorised scooters, quad-bikes, lawn-mowers and the like. In particular, the catalyst composition of the present invention may be used to treat exhaust gas from an engine having a displacement of less than or equal to 1000 cc, for instance 100 cc to 650 cc, or 150 to 500 cc.

### Examples

### Example 1 - Preparation of Catalyst Articles

Catalyst articles 3 to 5 were prepared with catalyst compositions comprising oxygen storage components having varying amounts of CeO₂, ZrO₂, and Gd₂O₃, Nd₂O₃, and/or La₂O₃. The catalyst articles were prepared according to the following general method.

Pre-prepared oxygen storage components were added to deionised water to form a slurry. To the slurry was added an aqueous solution of a rhodium compound. The resulting mixture was homogenised by stirring. A base was slowly added as a precipitating agent to the homogenised slurry until the slurry thickened.

A lanthanum doped alumina (an inorganic oxide) was then added to the slurry which was homogenised by stirring.

Solutions of palladium and barium compounds were then slowly added with constant stirring. A thickening agent was added to the slurry, which was then aged to produce a washcoat suitable for coating a substrate.

The washcoat was applied to the substrate by pulling the washcoat through the channels under vacuum. The substrate was a standard metallic foil, having a cell density of 300 cells per square inch (cpsi), an axial length of 4.00 cm and a width of 2.54 cm.

The coated substrate was then dried and calcined.

The catalyst articles produced each have a palladium loading of 636 g/m³, and a rhodium loading of 71 g/m³, corresponding to a palladium:rhodium ratio of 9:1.

Comparative Catalyst Articles 1 and 2 were produced according to the same method as described above, however, the oxygen storage component used comprised CeO₂ and ZrO₂ only.

The composition of the oxygen storage components used to prepare each catalyst article are shown in Table 1.

**Table 1**

| | **CeO₂ / mol%** | **ZrO₂ / mol%** | **Gd₂O₃ / mol%** | **Nd₂O₃ / mol%** | **La₂O₃ / mol%** |
|---|---|---|---|---|---|
| **Comparative Catalyst Article 1** | 49.7 | 50.3 | - | - | - |
| **Comparative Catalyst Article 2** | 41.7 | 58.3 | - | - | - |
| **Catalyst Article 3** | 40.0 | 55.8 | 4.2 | - | - |
| **Catalyst Article 4** | 39.8 | 55.6 | - | 4.5 | - |
| **Catalyst Article 5** | 39.8 | 55.6 | - | - | 4.7 |

### Example 2 - Light-off temperature tests

For each catalyst article, the light-off temperatures for each of carbon monoxide, nitrogen oxide, and hydrocarbons were determined using a Synthetic Catalyst Activity Test (SCAT) rig using the gas compositions shown in Table 2. Gas compositions were cycled between "Rich", "Stoichiometric", and "Lean" during light-off temperature tests. The light-off temperature was recorded as an average of the light-off temperatures obtained under each gas composition.

**Table2**

| | C₃H₈ | C₃H₆ | O₂ | NO | CO | H₂ | CO₂ | H₂O | N2 |
|---|---|---|---|---|---|---|---|---|---|
| | (ppmC) | (ppmC) | (vol%) | (ppm) | (vol%) | (vol%) | (vol%) | (vol%) | (vol%) |
| **Rich** | 500 | 2000 | 1.40 | 900 | 1.80 | 0.59 | 14.00 | 10.00 | Balance |
| **Stoichiometric** | 500 | 2000 | 1.40 | 900 | 1.60 | 0.53 | 14.00 | 10.00 | Balance |
| **Lean** | 500 | 2000 | 1.70 | 900 | 1.60 | 0.53 | 14.00 | 10.00 | Balance |

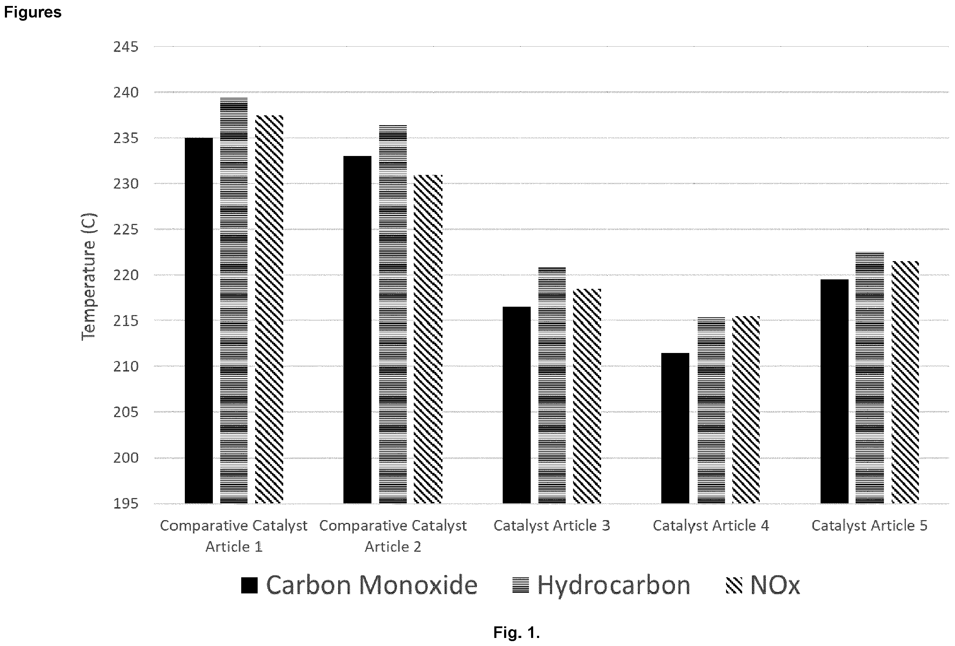

Under the gas compositions above, the catalyst articles were heated to 500 °C at a rate of 25 °C per minute and held at this temperature for 10 minutes. Light-off temperatures were measured for each catalyst article under a gas flow rate of 50 litres per minute. The average temperature at which 50% (T₅₀) of carbon monoxide (CO) and total hydrocarbons (THC) were oxidised, and 50% of nitrogen oxides (NOₓ) were reduced are shown in Figure 1.

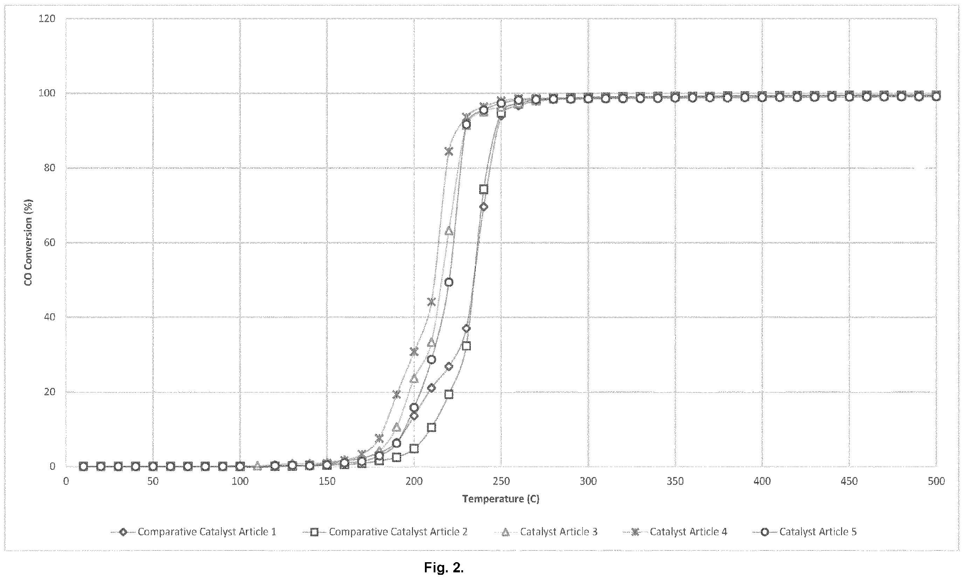

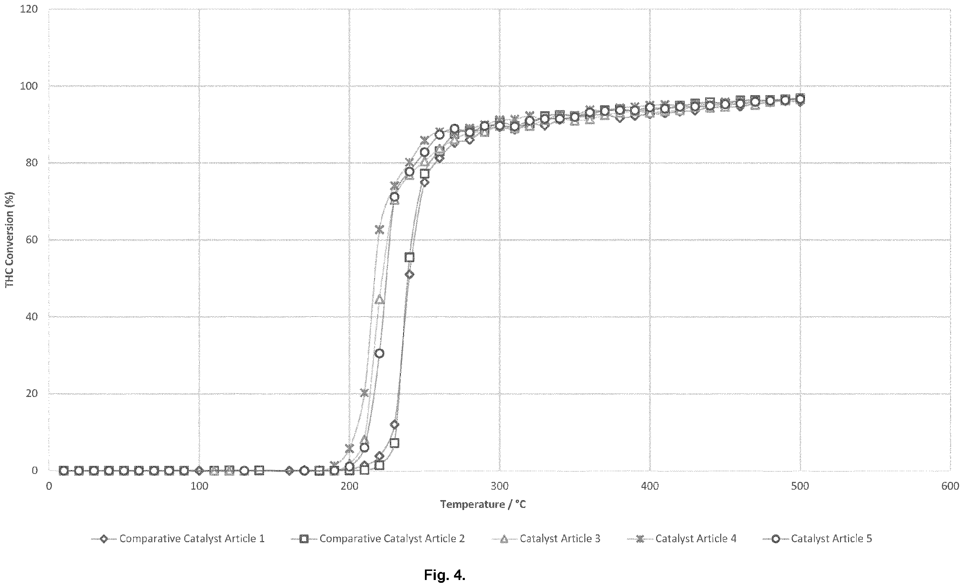

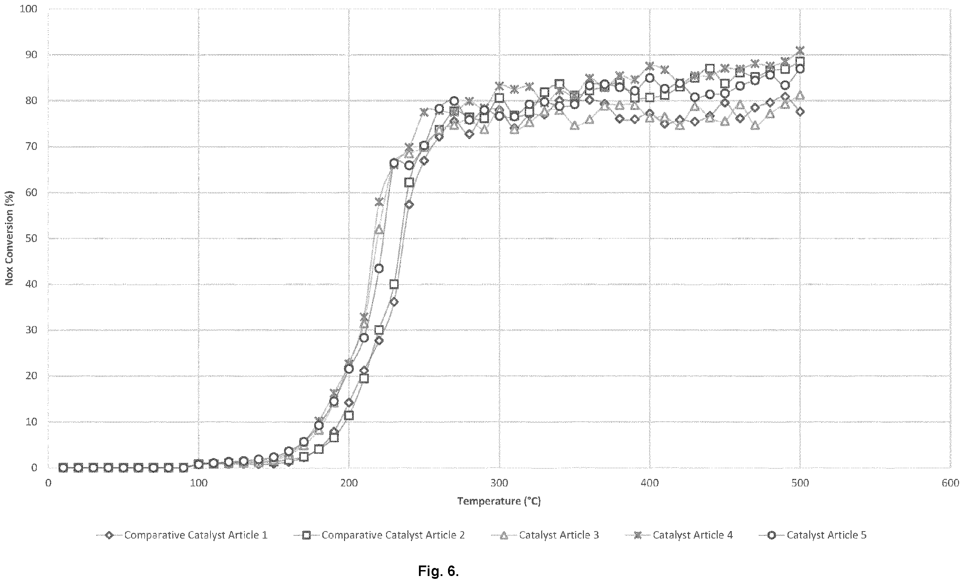

Complete light-off curves for carbon monoxide, hydrocarbons, and nitrogen oxides are shown in Figures 2, 4 and 6, respectively. Surprisingly catalyst articles 3-5, comprising catalyst compositions of the invention, show T₅₀ light-off temperatures up to 23.5 °C lower for carbon monoxide, 24 °C lower for hydrocarbons, and 22 °C lower for nitrogen oxides compared to the comparative catalyst articles 1-2. This reduction in T₅₀ temperatures is particularly advantageous in motorcycle applications, where the temperatures that the catalyst article must operate under are very variable.

### Example 3 - Effect of varying air-to-fuel ratios

The effect of varying air-to-fuel ratios (A/F) for each of the catalyst articles 3-5 and comparative catalyst articles 1-2 were tested. The gas compositions used contained 500 ppm propane, 2000 ppm propene, 900 ppm NO, 1.05 volume percent carbon monoxide, 0.35 volume percent hydrogen, 14.0 volume percent carbon dioxide, and 10.00 volume percent water. The volume percent of oxygen was varied to give the desired air-to-fuel ratio. The balance of gas was made up using nitrogen.

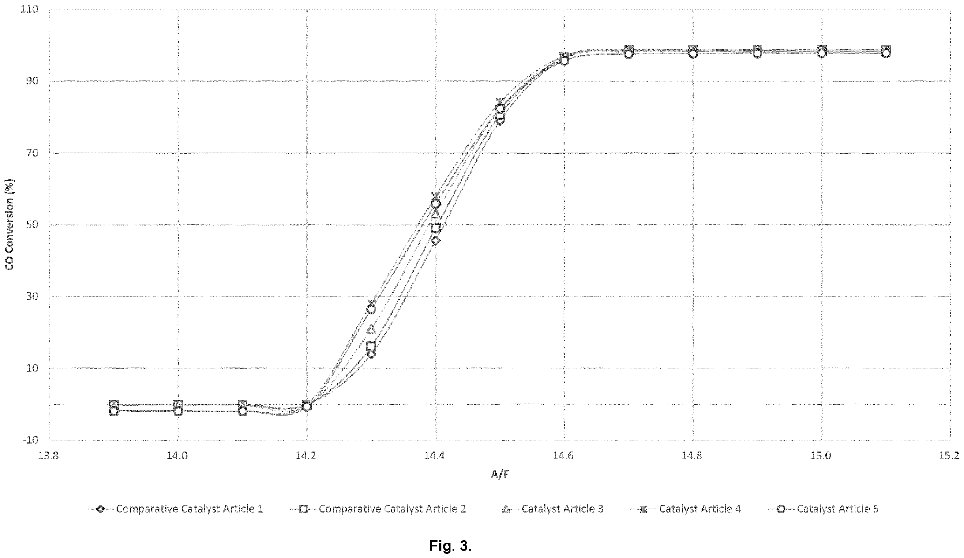

The results from these tests are summarised in Figures 3, 5 and 7. Catalyst compositions of the invention show superior conversion of carbon monoxide, hydrocarbons, and nitrogen oxides at all air-to-fuel ratios.

Catalyst articles 3-5, comprising catalyst compositions of the invention, show superior carbon monoxide oxidation ability specifically at lower air-to-fuel (i.e. more reducing conditions), as shown in Figure 3, whilst maintaining at least comparable hydrocarbon oxidation and nitrogen oxide abilities as the comparative examples.

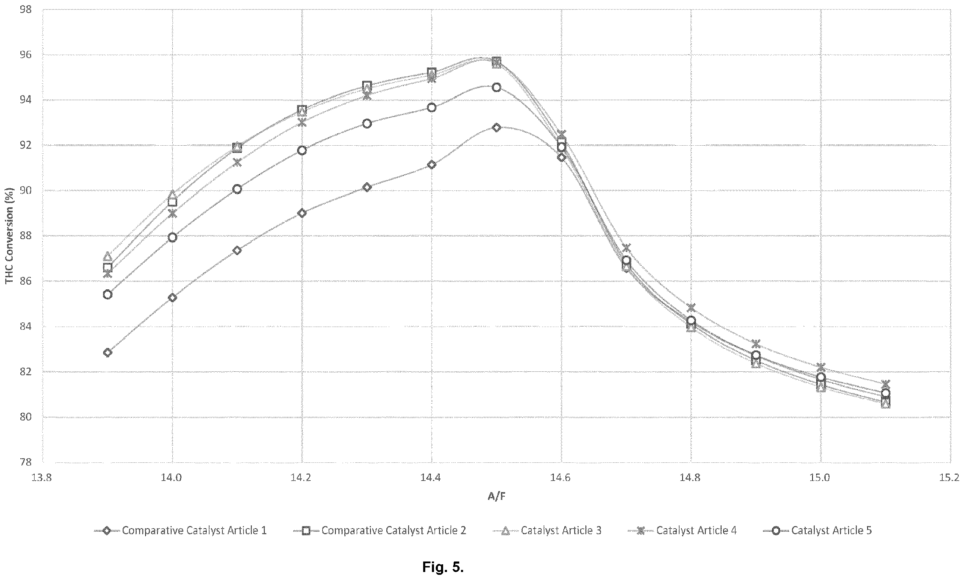

Catalyst articles 3-5, comprising catalyst compositions of the invention, show comparable hydrocarbon oxidation ability to comparative catalyst articles 1-2 at lower air-to-fuel ratios, and show superior oxidation ability to the comparative examples at higher air to fuel ratios, as shown in Figure 5.

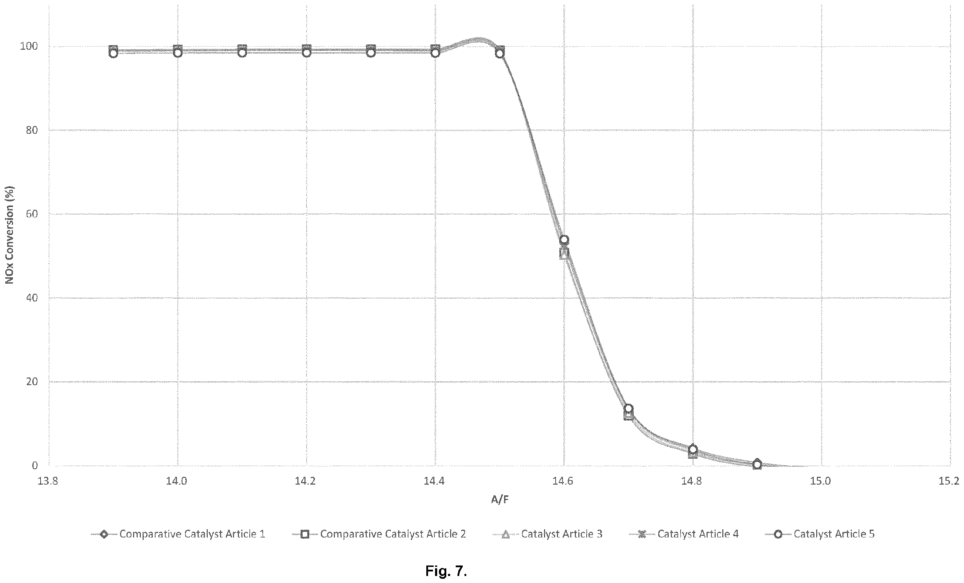

Catalyst articles 3-5, comprising catalyst compositions of the invention, show at least comparable nitrogen oxides reduction ability as the comparative catalyst articles 1-2 across all air-to-fuel ratios tested, as shown in Figure 7.

### Example 4

Catalyst Article 6, Catalyst Article 7, and comparative Catalyst Article 8 were prepared according to the same method described in Example 1. The composition of Catalyst Article 6, Catalyst Article 7, and comparative Catalyst Article 8 are shown in Table 3.

**Table 3**

| | **CeO₂ / mol%** | **ZrO₂ / mol%** | **Gd₂O₃ / mol%** |
|---|---|---|---|
| **Catalyst Article 6** | 47.6 | 48.1 | 4.3 |
| **Catalyst Article 7** | 40.0 | 55.8 | 4.2 |
| **Comparative Catalyst Article 8** | 49.7 | 50.3 | - |

The T₅₀ light-off temperatures for Catalyst Article 6 for CO, hydrocarbons, and NOₓ were compared to those of Catalyst Article 7 and Comparative Catalyst Article 8. Catalyst Article 6 and Comparative Catalyst Article 8 both comprise a 1:1 molar ratio of CeO₂:ZrO₂, whilst Catalyst Article 6 and Catalyst Article 7 both comprise the same molar amount of Gd₂O₃ but differing ratios of CeO₂:ZrO₂. The comparison data is summarised in Table 4 below.

**Table 4**

| | **T₅₀ Light-off Temperature (°C)** | | |
|---|---|---|---|
| | **CO** | **Hydrocarbon (THC)** | **NOₓ** |
| **Catalyst Article 6** | 184.5 | 190.5 | 192.5 |
| **Catalyst Article 7** | 209.5 | 214.5 | 215 |
| **Comparative Catalyst Article 8** | 235.0 | 239.5 | 237.5 |

As shown in Table 4 the T₅₀ light-off temperatures of a catalyst article is vastly improved for all of CO, hydrocarbons, and NOₓ when the oxygen storage component is doped with Gd₂O₃. In particular, when CeO₂ and ZrO₂ are present in approximately equimolar amounts, doping with Gd₂O₃ according to the present invention provides a significant decrease in T₅₀ light-off temperature.

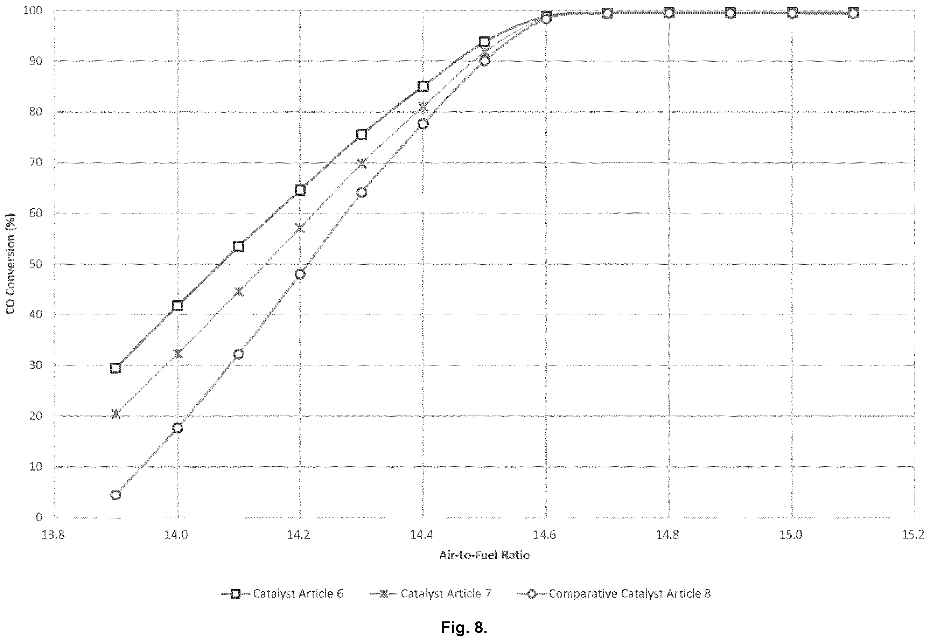

The carbon monoxide conversion efficiency of Catalyst Article 6 and Comparative Catalyst Article 8 as a function of air-to-fuel ratio is shown in Figure 8. Figure 8 shows that catalyst articles of the invention having an approximately equimolar amount of CeO₂ and ZrO₂ produce vastly improved CO reduction efficiency across a wide range of air-to-fuel ratios.

Further aspects and embodiments of the present disclosure are set out in the following numbered clauses:
1. A catalyst composition for treating the exhaust gas from a motorcycle engine, the composition comprising:
   i. 65 to 80 wt% of an oxygen storage component comprising:
      - 35-50 mol% CeO₂,
      - 45-60 mol% ZrO₂, and
      - 2-10 mol% of a rare earth oxide component selected from Gd₂O₃, Nd₂O₃, La₂O₃, or mixtures thereof;
   ii. 20 to 35 wt% of an inorganic oxide; and
   iii. a noble metal component supported on (i) and/or (ii), wherein the noble metal component comprises palladium and rhodium.
2. A catalyst composition according to clause 1, wherein the oxygen storage component comprises:
   a. 37-48 mol% CeO₂, or 38-46 mol% CeO₂;
   b. 48-58 mol% ZrO₂, or 49-57 mol% ZrO₂; or
   c. 4-9 mol% of a rare earth oxide component selected from Gd₂O₃, Nd₂O₃, La₂O₃, or mixtures thereof.
3. A catalyst composition according to clause 1, wherein the oxygen storage component consists of 35-50 mol% CeO₂, 45-60 mol% ZrO₂, and 2-10 mol% of a rare earth oxide component selected from Gd₂O₃, Nd₂O₃, La₂O₃, or mixtures thereof.
4. A catalyst composition according to clause 1, wherein the oxygen storage component consists of 37-48 mol% CeO₂, 48-58 mol% ZrO₂, and 2-10 mol% of a rare earth oxide component selected from Gd₂O₃, Nd₂O₃, La₂O₃, or mixtures thereof.
5. A catalyst composition according to clause 1, wherein the oxygen storage component consists of 38-46 mol% CeO₂, 49-57 mol% ZrO₂, and 4-9 mol% of a rare earth oxide component selected from Gd₂O₃, Nd₂O₃, La₂O₃, or mixtures thereof.
6 A catalyst composition according to any one of the preceding clauses, wherein the oxygen storage component comprises a molar ratio of CeO₂:ZrO₂ of 0.97-1.03:1, 0.98-1.02:1, 0.99-1.01:1, or about 1:1
7. A catalyst composition according to any one of the preceding clauses, wherein, the oxygen storage component comprises an approximately equimolar amount of CeO₂ and ZrO₂.
8. A catalyst composition according to any one of the preceding clauses, wherein the oxygen storage component comprises Gd₂O₃.
9. A catalyst composition according to any one of the preceding clauses, wherein the oxygen storage component comprises Nd₂O₃.
10. A catalyst composition according to any one of the preceding clauses, wherein the oxygen storage component comprises La₂O₃.
11. A catalyst composition according to any one of the preceding clauses, wherein the oxygen storage component comprises a combination of Gd₂O₃, Nd₂O₃, and/or La₂O₃.
12. A catalyst composition according to any one of the preceding clauses, wherein the oxygen storage component may be present in an amount of from 65 to 75 wt%, from 68 to 78 wt%, or from 70 to 75 wt%.
13. A catalyst composition according to any one of the preceding clauses, wherein the inorganic oxide is a doped or non-doped alumina, a doped or non-doped a silica, a doped or non-doped ceria, or a doped or non-doped ceria-zirconia.
14. A catalyst composition according to clause 13, wherein the inorganic oxide is a lanthanum doped alumina.
15. A catalyst composition according to any one of the preceding clauses, wherein the inorganic oxide is present in an amount of 25 to 34 wt%, or 27 to 33 wt% of the catalyst composition.
16. A catalyst composition according to any one of the preceding clauses, wherein the noble metal component is present in the catalyst composition in an amount of from 0.3 to 4.0 wt%, 0.4 to 3.8 wt%, 0.5 to 3.7 wt%, 0.6 to 3.6 wt%, or 0.7 to 3.5 wt%.
17. A catalyst composition according to any one of the preceding clauses, wherein the weight ratio of palladium to rhodium in the noble metal component is in the range of about 7:1 to about 11:1, preferably from about 8:1 to about 10:1, more preferably from about 8.5:1 to about 9.5:1.
18. A catalyst composition according to any one of the preceding clauses, wherein the noble metal component further comprises one or more additional noble metals selected from the group consisting of platinum, iridium, and ruthenium.
19. A catalyst composition according to any one of the preceding clauses, wherein the noble metal component is supported on the oxygen storage component and/or the inorganic oxide.
20. A catalyst composition according to clause 19, wherein rhodium is supported on the oxygen storage component and palladium is supported on both the inorganic oxide and the oxygen storage component.
21. A catalyst composition according to any one of the preceding clauses, wherein the catalyst composition further comprises a group 1 or a group 2 metal.
22. A catalyst composition according to clause 21, wherein the one or more group 1 or group 2 metals is selected from magnesium, calcium, strontium, and barium
23. A catalyst composition according to clause 22, wherein the group 1 or group 2 metal is barium.
24. A catalyst composition according to any one of clauses 21 to clause 23, wherein the group 1 or group 2 metal is present in the catalyst composition in an amount of 0.7 to 2 wt%, from 0.9 to 1.9 wt%, from 1.1 to 1.8 wt%, or from 1.2 to 1.7 wt%.
25. A washcoat composition comprising:
   i. a catalyst composition according to any one of clauses 1 to 24 and
   ii. a liquid medium.
26. A washcoat composition according to clause 25, wherein the washcoat has a solids content of from 40 to 50 wt%, 42 to 47 wt%, or 43 to 46 wt%.
27. A washcoat composition according to clause 25 or clause 26, wherein the noble metal component is present in an amount of from 0.07 to 0.5 or 0.7 to 3.5 wt% on a noble metal basis as a percentage of the entire washcoat.
28. A catalyst article comprising a substrate and a catalyst composition according to any one of clauses 1 to 24 coated on the substrate.
29. A catalyst article according to clause 28 wherein the substrate is a metallic substrate, a cordierite substrate, a silicon carbide substrate, or a metallic foil.
30. A catalyst article according to clause 28 or 29, wherein the catalyst article has an axial length between an inlet end and an outlet, wherein the axial length is from 40 to 120 millimetres, 45 to 110 millimetres, or 50 to 100 millimetres.
31. A catalyst article according to any one of clauses 28 to 30, wherein the catalyst article comprises channels traversing the axial length through which exhaust gas will pass in use.
32. A catalyst article according to any one of clauses 28 to 31, wherein the catalyst article comprises a single layer of the catalyst composition applied to the channels of the substrate.
33. A catalyst article according to clause 31 or clause 32, wherein the catalyst article has 200 to 360 cells per square inch, from 220 to 340 cells per square inch, from 240 to 320 cells per square inch, or from 260 to 300 cells per square inch.
34. A catalyst article according to any one of clauses 31 to 33 wherein the channels of the catalyst article are separated from one another by walls, the walls having a thickness of from 30 to 50 microns.
35. A catalyst article according to any one of clauses 28 to 34, wherein the catalyst article has a void volume of from 50 cm³ to 650 cm³, preferably 60 cm³ to 360 cm³, 70 to 615 cm³, or 80 to 610 cm³.
36. A catalyst article according to any one of clauses 28 to 35, wherein the noble metal component is loaded on the catalyst article in an amount of from 1060 grams per m³ to 1766 grams per m³.
37. A catalyst article according to any one of clauses 28 to 36 wherein the catalyst article has a width, the width being 26 to 90 millimetres, 28 to 86 millimetres, 30 to 84 millimetres, 32 to 82 millimetres, or 33 to 80 millimetres.
38. A catalyst article according to any one of clauses 28 to 37 wherein the ratio of the axial length of the catalyst article to the width of the catalyst article is 1:3 or more, 1:2 or more: or 2:3 or more.
39. A catalyst article according to any one of clauses 31 to 38, wherein the surface area of the channels of the catalyst article are from 2 to 4.4 mm² per mm³, 2.2 to 4.2 mm² per mm³, 2.4 to 4 mm² per mm³, or 2.6 to 4 mm² per mm³
40. A method of preparing a catalyst article according to any one of clauses 28 to 39, comprising the step of coating a substrate with a washcoat composition according to any one of clauses 25 to 27.
41. An exhaust system comprising a catalyst article according to any one of clauses 28 to 39.
42. A system comprising an internal combustion engine and a catalyst article according to any one of clauses 28 to 39, wherein the internal combustion engine is a gasoline fuelled spark ignition engine having a displacement of less than or equal to 1000 cc.
43. A motorcycle comprising the system of clause 42.
44. A method of treating an exhaust gas from an engine having a displacement of less than or equal to 1000 cc comprising contacting the exhaust gas with a catalyst article according to any one of clauses 28 to 39.
45. A method of treating an exhaust gas from an engine according to clause 43, wherein the engine is a gasoline fuelled spark ignition engine.

## Claims

1. A catalyst composition for treating the exhaust gas from a motorcycle engine, the composition comprising:
i. 65 to 80 wt% of an oxygen storage component comprising:
• 35-50 mol% CeO₂,
• 45-60 mol% ZrO₂, and
• 2-10 mol% of a rare earth oxide component selected from Gd₂O₃, Nd₂O₃, La₂O₃, or mixtures thereof;
ii. 20 to 35 wt% of an inorganic oxide; and
iii. a noble metal component supported on (i) and/or (ii), wherein the noble metal component comprises palladium and rhodium.

2. A catalyst composition according to claim 1, wherein the oxygen storage component comprises:
a. 37-48 mol% CeO₂, or 38-46 mol% CeO₂;
b. 48-58 mol% ZrO₂, or 49-57 mol% ZrO₂; or
c. 4-9 mol% of a rare earth oxide component selected from Gd₂O₃, Nd₂O₃, La₂O₃, or mixtures thereof

3. A catalyst composition according to claim 1 or claim 2, wherein the oxygen storage component comprises a molar ratio of CeO₂:ZrO₂ of 0.97-1.03:1, 0.98-1.02:1, 0.99-1.01:1, or about 1:1.

4. A catalyst composition according to any one of the preceding claims, wherein the oxygen storage component is present in an amount of from 65 to 75 wt%, from 68 to 78 wt%, or from 70 to 75 wt% based on the total weight of the catalyst composition.

5. A catalyst composition according to any one of the preceding claims, wherein the inorganic oxide is present in an amount of 25 to 34 wt%, or 27 to 33 wt% of the catalyst composition based on the total weight of the catalyst composition.

6. A catalyst composition according to any one of the preceding claims, wherein the noble metal component is present in the catalyst composition in an amount of from 0.3 to 4.0 wt%, 0.4 to 3.8 wt%, 0.5 to 3.7 wt%, 0.6 to 3.6 wt%, or 0.7 to 3.5 wt% based on the total weight of the catalyst composition.

7. A catalyst composition according to any one of the preceding claims, wherein the weight ratio of palladium to rhodium in the noble metal component is in the range of about 7:1 to about 11:1, preferably from about 8:1 to about 10:1, more preferably from about 8.5:1 to about 9.5:1.

8. A washcoat composition comprising:
i. a catalyst composition according to any one of claims 1 to 7; and
ii. a liquid medium.

9. A catalyst article comprising a substrate and a catalyst composition according to any one of claims 1 to 7 coated on the substrate.

10. A catalyst article according to claim 9, wherein the catalyst article comprises a single layer of the catalyst composition applied to the channels of the substrate.

11. A catalyst article according to any one of claims 9 or 10, wherein the noble metal component is loaded on the catalyst article in an amount of from 1060 grams per m³ to 1766 grams per m³.

12. A method of preparing a catalyst article according to any one of claims 9 to 11, comprising the step of coating a substrate with a washcoat composition according to claim 8.

13. An exhaust system comprising a catalyst article according to any one of claims 9 to 11

14. A system comprising an internal combustion engine and a catalyst article according to any one of claims 9 to 11, wherein the internal combustion engine is a gasoline fuelled spark ignition engine having a displacement of less than or equal to 1000 cc.

15. A method of treating an exhaust gas from an engine, in particular a gasoline fuelled spark ignition engine, having a displacement of less than or equal to 1000 cc comprising contacting the exhaust gas with a catalyst article according to any one of claims 9 to 11.
